# EUROPÄISCHE PATENTSCHRIFT

(11) **EP 1 663 695 B1**
(45) Veröffentlichungstag und Bekanntmachung des Hinweises auf die Patenterteilung: **04.03.2009**
(21) Anmeldenummer: 04766599.7
(22) Anmeldetag: 25.08.2004
(51) Int. Cl.: B60K 31/00

(54) **VERFAHREN UND VORRICHTUNG ZUR FAHRERUNTERST TZUNG**
METHOD AND DEVICE FOR DRIVER SUPPORT
PROCEDE ET DISPOSITIF D'ASSISTANCE AU CONDUCTEUR

(30) Priorität: 12.09.2003 DE 10342528
(43) Veröffentlichungstag der Anmeldung: 07.06.2006
(73) Patentinhaber: ROBERT BOSCH GMBH, 70442 Stuttgart (DE)
(72) Erfinder: SCHMITZ, Carsten, 71229 Leonberg (DE)
(86) Internationale Anmeldenummer: PCT/EP2004/051906
(87) Internationale Veröffentlichungsnummer: WO 2005/025918

(56) Entgegenhaltungen:
- EP-A- 1 223 093
- EP-A- 1 347 268
- DE-A- 10 205 225
- US-A- 6 107 939
- US-B1- 6 393 361

## Beschreibung

### Stand der Technik

Die Erfindung betrifft ein Verfahren und eine Vorrichtung zur Fahrerunterstützung.

Derartige Verfahren bzw. Vorrichtungen, sogenannte Fahrerassistenzsysteme, sind aus dem Stand der Technik in verschiedenen Ausprägungen bekannt. Beispiele für solche Fahrerassistenzsysteme sind adaptive Fahrgeschwindigkeitsregler (Adaptive Crouse Control, ACC), welche die Fahrgeschwindigkeit des Fahrzeugs mit Blick auf einen Abstand zu einem vorausfahrenden Fahrzeug anpassen, Spurverlassenswarner, welche den Fahrer bei Verlassen der Fahrspur warnen, Systeme zur Überwachung des toten Winkels, welche bei einem Spurwechsel bei Objekten im toten Winkel des Sichtfeldes des Fahrers warmen, etc.. Ein Beispiel für einen adaptiven Fahrgeschwindigkeitsregler zeigt die DE-A 101 18 265, ein Beispiel für einen Spurverlassenswarner die EP 1 074 430 A1 Vor allem bei Spurverlassenswarnern, aber auch in einigen ACC-Ausführungen wird überprüft, ob das Fahrzeug die beispielsweise durch Fahrbahnrandmarkierungen begrenzte Fahrbahn verlässt bzw. zu verlassen droht. Eine deutliche Funktionsverbesserung würde hierbei erreicht werden, wenn zwischen einem beabsichtigten und einem unbeabsichtigten Spurwechsel, also beispielsweise zwischen einem Spurwechsel zu Überholzwecken und einem Spurwechsel aufgrund von Unaufinerksamkeit des Fahrers, unterschieden werden könnte.

Die EP 1223093 A2 zeigt eine Vorgehensweise zur Unterscheidung eines beabsichtigten und eines unbeabsichtigten Spurwechsels. Die dort beschriebene Vorgehensweise stützt die Entscheidung, ob ein Spurwechsel beabsichtigt ist auf die Größen Lenkwinkel, einem Winkel zwischen der Fahrtrajektorie des eigenen Fahrzeugs und der Fahrtrajektorie des vorausfahrenden Fahrzeugs und einer vergleichbaren Größe bei Kurvenfahrt. Wesentlicher Punkt ist also, dass ein vorausfahrendes Fahrzeug vorhanden sein muss und das Eigenfahrzeug Kenntnisse über die Fortbewegung dieses Fahrzeugs ermitteln muss.

Das US-Patent 6,393,361, das den Oberbegriff der Ansprüche 1 und 13 definiert, zeigt eine Vorgehensweise, nach welcher bei Annäherung an ein vorherfahrendes Fahrzeug und damit bestehender Kollisionsgefahr in die Bremsanlage eingegriffen wird, wenn erkannt wurde, dass der Fahrer unaufmerksam ist. Ein Kriterium, das in diesem Zusammenhang überprüft wird, ist, ob ein beabsichtigter Spurwechsel zu erwarten ist. Dies erfolgt auf der Basis von Betriebsgrößen, die mit bestimmten Kriterien bewerten werden.

### Vorteile der Erfindung

Die obige Aufgabe wird durch die Merkmale der Ansprüche der 1 und 13 gelöst. Vorteilhafte Weiterbildungen ergeben sich aus den Unteransprüchen.

Zur Unterscheidung, ob ein vom Fahrer beabsichtigter Spurwechsel oder ein unbeabsichtigter Spurwechsel vorliegt, wird ein Klassifikator herangezogen, der auf der Basis von Betriebsgrößen des Fahrzeugs die Spurwechselvorgänge klassifiziert. Dadurch wird in vorteilhafter Weise eine erhebliche Reduzierung von Fehlalarmen bei einem Spurverlassenswamungssystem erreicht, da der Fahrer nur dann gewarnt wird, wenn der Spurwechsel nicht beabsichtigt ist, insbesondere dann, wenn aufgrund einer Unaufmerksamkeit des Fahrers der Spurwechsel erfolgt bzw. zu erfolgen droht.

Besonders vorteilhaft ist der Einsatz eines neuronalen Netzes als Klassifikator, welches aufgrund der zugeführten Betriebsgrößen eine Entscheidung vornimmt, ob der Spurwechsel beabsichtigt oder unbeabsichtigt ist. Dies führt zu einer sehr zufriedenstellenden Genauigkeit der Klassifizierung und zu einer weiteren Reduzierung von Fehlalarmen.

Besonders zuverlässige Unterscheidungen ergeben sich, wenn als Betriebsgrößen der Lenkwinkel, der Abstand des Fahrzeugs zum Fahrbahnrand, des Winkels zwischen Fahrbahnrand und Fahrspur des Fahrzeugs und/oder einer Größe, welche den Beschleunigungswunsch des Fahrers repräsentiert, ausgewählt werden.

In vorteilhafter Weise wird die dargestellte Vorgehensweise auch im Zusammenhang mit anderen Fahrerassistenzsystemen, beispielsweise mit einem adaptiven Fahrgeschwindigkeitsregler, bei welchem bei beabsichtigtem Spurwechsel die Verzögerung des Fahrzeug bei Auffahren auf ein langsameres Objekt unterdrückt werden könnte.

Besonders vorteilhaft ist der Einsatz eines Klassifikators, welcher aufgrund der zur Verfügung stehenden Betriebsgrößen des Fahrzeugs eine Klassifizierung nach vorgegebenen Kriterien vornimmt, ob der Spurwechsel beabsichtigt oder unbeabsichtigt ist

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt dabei ein Übersichtsbild für eine Verarbeitungseinheit, in welcher die Spurwechselerkennung durchgeführt wird. Diese Verarbeitungseinheit ist durch einen Spurverlassenswarner dargestellt. In Figur 2 ist ein Flussdiagramm dargestellt, welches die grundsätzliche Vorgehensweise zur Spurwechselklassifizierung im Zusammenhang mit der Spurverlassenswarnung darstellt. Figur 3 zeigt ein Ablaufdiagramm für ein erstes Ausführungsbeispiel zur Unterscheidung eines unbeabsichtigten und eines beabsichtigten Spurwechsels. In den Figuren 4 und 5 sind Flussdiagramme skizziert, welche ein zweites Ausführungsbeispiel zur Erkennung, ob ein Spurwechsel beabsichtigt ist oder nicht, darstellen.

### Beschreibung von Ausführungsbeispielen

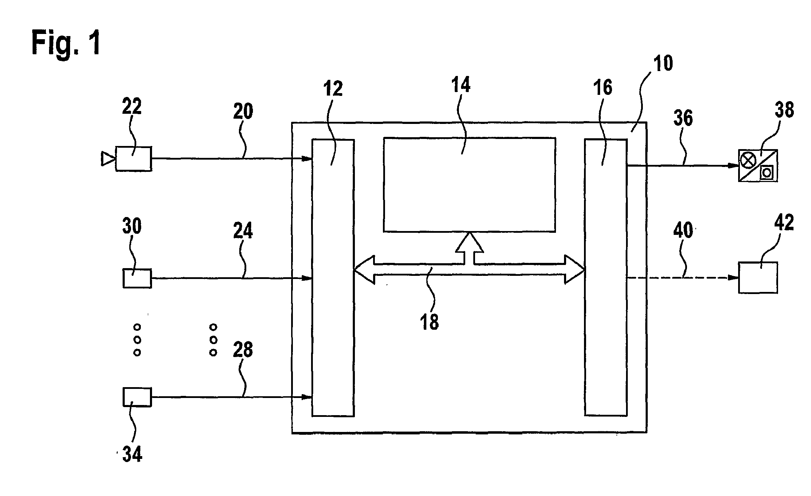

Figur 1 zeigt eine Vorrichtung, welche Teil eines Systems zur Fahrerunterstützung ist (z.B. zur Warnung und/oder zum Ansteuern eines Stellelements zum Einhalten der Fahrspur bei Verlassen oder drohendem Verlassen der Fahrspur). Dargestellt ist eine Steuer- bzw. Auswerteeinheit 10, welche wenigstens eine Eingangsschaltung 12, einen Mikrocomputer 14 und eine Ausgangsschaltung 16 aufweist. Diese Elemente sind mit einem Bussystem zum gegenseitigen Datenaustausch miteinander verbunden. Der Eingangsschaltung 12 werden Eingangsleitungen von verschiedenen Messeinrichtungen zugeführt, über die Messsignale bzw. Messinformationen übermittelt werden. Eine erste Eingangsleitung 20 verbindet die Eingangsschaltung 12 mit einem Bildsensorsystem 22, welches die Szene vor dem Fahrzeug aufnimmt Entsprechende Bilddaten werden über die Eingangsleitung 20 übermittelt. Ferner sind Eingangsleitungen 24 bis 26 vorgesehen, welche die Eingangsschaltung 12 mit Messeinrichtungen 30 bis 34 verbinden. Bei diesen Messeinrichtungen handelt es sich beispielsweise um Messeinrichtungen zur Messung der Fahrzeuggeschwindigkeit, zur Erfassung des Lenkwinkels, zur Erfassung einer Größe, welche einen Beschleunigungswunsch des Fahrers repräsentiert, beispielsweise das Ausmaß der Fahrpedalbetätigung durch den Fahrer, sowie zur Erfassung weiterer Betriebsgrößen des Fahrzeugs, welche im Zusammenhang mit der nachfolgend beschriebenen Vorgehensweise Bedeutung haben. Über die Ausgangsschaltung 16 und Ausgangsleitung 36 wird wenigstens eine Warneinrichtung 38 angesteuert, beispielsweise eine Warnlampe und/oder ein Lautsprecher für eine akustische Warnung und/oder für eine Sprachausgabe und/oder für ein Display für die Anzeige eines Bildes und/oder eines Stellements für eine haptische Anzeige, mit deren Hilfe der Fahrer über das (drohende) Verlassen der Fahrspur informiert wird. Darüber hinaus oder alternativ dazu ist in einigen Ausführungsbeispielen vorgesehen, über die Ausgangsschaltung 16 und eine Ausgangsleitung 40 ein Stellsystem zu 41 anzusteuern, welches automatisch beispielsweise durch Eingriff in die Lenkung des Fahrzeugs das Fahrzeug wieder in die Spur zurückführt und so das Verlassen der Fahrspur verhindert.

Mittels Methoden der Bildanalyse wird im Ausführungsbeispiel des Spurverlassenswarners auf der Basis der vom Bildsensorsystem zugeführten Bilddaten der Szene vor dem Fahrzeug Spurdaten ermittelt, die den Verlauf und die Größe der Fahrspur repräsentieren. So werden z.B. die Fahrspurrandmarkierungen (linker und/oder rechter Fahrspurrand) erfasst und der Verlauf des jeweiligen Fahrspurrandes beispielsweise als Polynom (Potenzfunktion dritter Ordnung) angenähert. Ferner wird der Verlauf die Fahrspur des Fahrzeugs, beispielsweise für das rechte und/oder linke Rad, aus Fahrzeuggeometriegrößen, den Aktuellen und ggf. vergangenen Größen der Fahrzeuggeschwindigkeit, dem Lenkwinkel oder der Querbeschleunigung, etc. berechnet und ebenfalls als Polynom dargestellt. In einem Beispiel wird eine Fahrerwarnung bzw. eine Spurhaltereaktion vorgenommen, wenn die beiden Funktionen (Verlauf der Spurmarkierung und Verlauf der Fahrspur des Fahrzeugs) in einem bestimmten Bereich, der einer bestimmten Entfernung entspricht, Schnittpunkte aufweisen. Die Warnung erfolgt im bevorzugtem Ausführungsbeispiel bei Überschreiten der linken und bei Überschreiten der rechten Spurmarkierung. Aus den genannten Daten werden weitere Spurdaten berechnet, beispielsweise der laterale Abstand zwischen Spurmarkierung und Spur des Fahrzeugs (rechte Seite zum rechten Rand, linke Seite zum linken Rand), die Krümmung der Fahrspur, und/oder der Winkel zwischen Fahrspur und Spurmarkierung (rechte Fahrspur zum rechten Rand, linke Fahrspur zum linken Rand) anhand von Tangentenvergleichen.

Wesentlich bei einer solchen Funktion ist, dass der Fahrer nur dann gewarnt wird, wenn er ein Überfahren der Spurmarkierung tatsächlich nicht beabsichtigt.

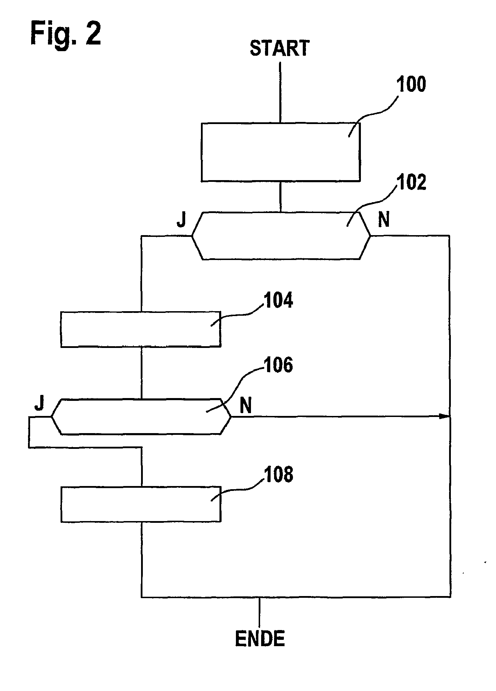

Figur 2 zeigt ein Flussdiagramm, bei welchem der skizzierte Spurverlassenswarner durch einen Klassifikator ergänzt ist, der auf der Basis von Betriebsgrößen des Fahrzeugs die Spurwechselsituation bewertet und in "unbeabsichtigter Spurwechsel" oder "beabsichtigter Spurwechsel" klassifiziert. Das Flussdiagramm der Figur 2 skizziert dabei ein entsprechendes Programm, welches im Mikrocomputer der in Figur 1 skizzierten Vorrichtung abläuft. Im ersten Schritt 100 werden (einmal für die eine Fahrzeugseite, in einem anderen Durchlauf für die andere Fahrzeugseite) die oben skizzierten Fahrspurdaten eingelesen, d. h. der Verlauf der Fahrspurrandmarkierung, der Verlauf der Istfahrspur des Fahrzeugs, eine Größe für den lateralen Abstand zwischen Fahrzeug und Fahrspurrand, eine Größe für den Winkel zwischen Fahrzeugspur und Fahrspurrand, sowie die weiteren oben genanten Betriebsgrößen, etc. Im darauffolgenden Schritt 102 wird überprüft, ob ein Verlassen der Fahrspur vorliegt bzw. ob ein solches Verlassen droht. Ist dies nicht der Fall, wird Schritt 100 wiederholt. Wird ein Verlassen bzw. ein drohendes Verlassen erkannt, so wird in Schritt 104 durch den Klassifikator anhand von Betriebsgrößen ermittelt, ob der Spurwechsel beabsichtigt oder unbeabsichtigt ist. Ausführungsbeispiele für diesen Klassifikator werden nachfolgend dargestellt. Daraufhin wird in Schritt 106 überprüft, ob das Verlassen der Fahrspur beabsichtigt ist oder nicht. Ist es beabsichtigt, unterbleibt die Warnung bzw. die Spurhaltereaktion und das Programm wird mit Schritt 100 wiederholt. Ist im anderen Fall jedoch erkannt worden, dass das Verlassen der Fahrspur unbeabsichtigt ist, so wird gemäß Schritt 108 optisch, akustisch und/oder haptisch gewarnt bzw. eine Spurhaltereaktion, beispielsweise das Ansteuern eine Stellelements zur Beeinflussung der Lenkung, ausgeführt.

Die grundsätzliche Vorgehensweise zur Klassifikation baut auf der Auswertung von wenigstens zwei Betriebsgrößen des Fahrzeugs auf, anhand derer auf das Verhalten des Fahrers geschlossen werden kann. Betriebsgrößen, die dafür geeignet sind, sind beispielsweise der Lenkwinkel, die Geschwindigkeit des Fahrzeugs bzw. die Beschleunigung oder Verzögerung, der laterale Offset zwischen Fahrzeugspur und Fahrspurrand, insbesondere seine Veränderung, und/oder der Winkel der Fahrzeugspur zum Fahrbahnrand. Dabei wird in Bezug auf den Lenkwinkel das Lenkverhalten abgeprüft, welches bei Spurwechselabsicht deutlich erkennbar ist. Ein Lenkwinkel größer als ein vorbestimmter Wert, insbesondere eine entsprechend zeitliche Änderung des Lenkwinkels deutet auf Spurwechselabsicht hin. Während einer Kurvenfahrt ist hierbei die ermittelte Fahrbahnkrümmung zu berücksichtigen. Ferner liegt bei Spurwechselabsicht insbesondere nach links meistens eine Beschleunigung des Fahrzeugs vor, so dass bei einer Beschleunigung des Fahrzeugs bzw. einem Beschleunigungswunsch des Fahrers größer als ein vorgegebener Schwellenwert von einem beabsichtigten Spurwechsel auszugehen ist. Eine weitere geeignete Größe ist der laterale Abstand des Fahrzeugs zur Spurmarkierung, insbesondere dessen zeitliche Änderung. Diese stellt ein Maß für die Stärke, mit der sich ein Fahrzeug der Fahrspurrandmarkierung nähert, dar. Dieses Maß ist bei gewollten Spurwechseln erheblich größer als bei ungewollten. Entsprechendes gilt für den Winkel zur Fahrspurmarkierung, der bei gewollten Spurwechseln deutlich größer ist als bei ungewollten.

Zusammenfassend ist festzustellen, dass eine Klassifikation des Spurwechselvorgangs in ungewollte und gewollte Spurwechsel anhand von Betriebsgrößen des Fahrzeugs erfolgt, insbesondere wenn der Lenkwinkel einen Schwellenwert überschreitet, und/oder der Beschleunigungswunsch des Fahrers einen Schwellenwert überschreitet, und/oder der zeitliche Verlauf des lateralen Abstands zur Randmarkierung einen Schwellenwert überschreitet, und/oder der Winkel zur Randmarkierung einen Schwellenwert überschreitet. Diese Kriterien werden gewichtet zur Klassifizierung des Spurwechselvorgangs in beabsichtigte und unbeabsichtigte Spurwechsel ausgenutzt, wobei im Allgemeinen ein beabsichtigter Spurwechsel bei Vorliegen wenigstens einer der beschriebenen Situationen erkannt wird, ein unbeabsichtigter bei Nichtvorliegen.

Es hat sich gezeigt, dass ein Spurwechsel nach links und ein Spurwechsel nach rechts mit unterschiedlichen Kriterien zu bewerten ist, da der Spurwechsel nach links meist mit einem Überholvorgang verbunden ist und das Fahrzeug beschleunigt wird. Auch ist in diesem Fall bei gewolltem Spurwechsel das Lenkverhalten deutlich verstärkt und der Winkel zur Spurmarkierung sehr groß. Entsprechend ist die Gewichtung dieser Kriterien bei einem Spurwechsel nach rechts gegenüber einem Spurwechsel nach links zu verändern, insbesondere zu senken.

Zur Realisierung des Klassifikators nach Maßgabe der oben dargestellten Vorgehensweise eignen sich in einem bevorzugten Ausführungsbeispiel neuronale Netze. In einem bevorzugten Ausführungsbeispiel hat sich ein MLP-Netz (Mehrlagiges Perzeptron) als geeignet erwiesen. Diesem neuronalen Netz werden die oben dargestellten Größen für die linke und für die rechte Seite zugeführt Nach Maßgabe der den einzelnen Neuronen zugeordneten Gewichten (Schwellenwerte) wird durch das neuronale Netz eine Ausgangsgröße gebildet, welche einen gewollten Spurwechsel oder einen ungewollten Spurwechsel anzeigt.

Eine zweite Realisierungsmöglichkeit besteht in der Vorgabe konkreter Bedingungen für die einzelnen Größen, aus deren Vorliegen ein gewolltes oder ein ungewolltes Spurwechselverhalten abgeleitet wird, wobei zur Absicherung der Entscheidung zumindest in unklaren Fällen eine Kombination der Kriterien heranzuziehen ist. Wenn z. B. der Winkel zur Fahrspur beim Spurberühren größer als 4° ist, dann kann eine Unaufmerksamkeit des Fahrers ausgeschlossen werden, sofern keine erhebliche Spurkrümmung vorliegt Entsprechend kann man für jede verwendete Größe eine entsprechende Entscheidungsregel bilden. Für die verbleibenden Situationen, die in keiner Entscheidungsregel ein eindeutiges Ergebnis ergeben, wird anhand eines verbleibenden Merkmals (beispielsweise der zeitlichen Änderung des Abstands zur Spurgrenze) scharf entschieden, ob ein gewollter oder ein ungewollter Spurwechsel vorliegt. Die Entscheidungskriterien, zumindest ihre Gewichtung, sind dabei in der Regel für die linke und die rechte Seite verschieden.

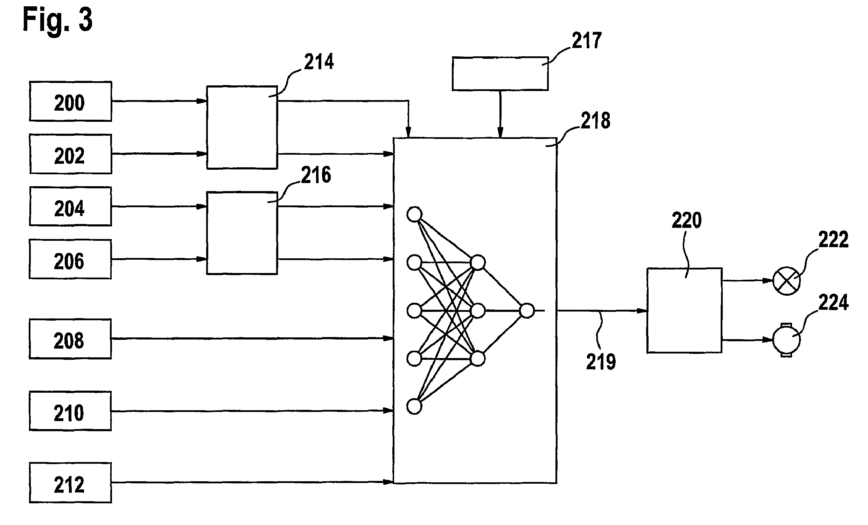

In Figur 3 ist anhand eines Ablaufdiagramms das oben skizzierte erste Ausführungsbeispiel dargestellt. Die einzelnen Blöcke repräsentieren dabei entsprechende Programme oder Programmteile, während die Verbindungslinien den Signalfluss darstellen.

Zugeführt werden in dem in Figur 3 dargestellten Ausführungsbeispiel der Verlauf des linken Fahrspurrands 200, der Verlauf der linken Fahrspur 202 des Fahrzeugs, der Verlauf der rechten Randmarkierung 204, der Verlauf der rechten Fahrspur des Fahrzeugs 206, die Geschwindigkeit des Fahrzeugs 208, der Lenkwinkel 210 sowie der Beschleunigungswunsch 212 des Fahrers. In 214 bzw. 216 wird aus den Fahrspurrand- bzw. Fahrspurverläufen jeweils getrennt für die linke und für die rechte Seite der Abstand des Fahrzeugs vom Fahrspurrand (Offset) sowie der Winkel zwischen Fahrzeugspur und Fahrspurrand ausgerechnet. Ferner liegen in einem Speicher 217 gespeicherte frühere Werte für die Größen vor, z.B die Größen von 10 Zeiteinheiten, vor 30 Zeiteinheiten, etc. Die genannten Größen werden einem neuronalen Netz 218 zugeführt. Ausgangssignal 219 des neuronalen Netzes ist eine Information, dass ein beabsichtigter Spurwechsel oder ein unbeabsichtigter Spurwechsel vorliegt. Diese Information geht zur Fahrerassistenzfunktion 220 (im bevorzugten Ausffüwungsbeispiel zum Spurverlassenswarner), der auf die eingangs genannte Art bei einem unbeabsichtigten Verlassen der Fahrspur eine Warneinrichtung 222 betätigt und/oder ein Stellelement 224 ansteuert.

In einer anderen vorteilhaften Ausführungsform ist das Ausgangssignal 219 nicht 0 oder 1, sondern nimmt einen Wert in dem Einheitsintervall [0,1] an. Dies ist eine zusätzlich hilfreiche Information bei der Klassifikation. Ein "sicher" erkannter Spurwechseln wird beispielsweise einen Ausgabewert nahe bei 1 haben, etwa 0.99998 oder 0.95887 (oder auch 1.0) oder ähnlich, entsprechend wird eine "sicher" erkannte Unaufmerksamkeit einen Wert nahe 0 aufweisen. Ein Spurwechsel, bei welchen die Entscheidung nicht sicher ausgefallen ist, wird in der Ausgabe des neuronalen Netzes einen Wert nicht nahe 0 oder 1 zeigen, sondern etwa 0.771 oder 0.334 oder auch 0.501. Die Entscheidung der Klassifikation kann dann mit einer Schwelle scharf ausgewertet werden ("Defuzzifizierung"), z.B. mit der Entscheidung ">? 0.5". Diese Schwelle kann nun aber adaptiv dem Fahrer angepaßt werden. Wählt man als Schwelle z.B. "> 0.9", dann wird der Spurverlassenswarner "häufiger" warnen, da im unsicheren Fall dann eine Warnung erfolgt.

Ein sportlicher Fahrer, der weniger Warnungen haben möchte, kann als Schwelle "> 0.2" wählen, muß dann aber in Kauf nehmen, auch bei Unaufmerksamkeit einmal nicht gewarnt zu werden. Je nachdem, was eine Akzeptanzstudie über die Anzahl der zulässigen Fehlwarnungen / Stunde aussagen wird, wird die Schwelle des Netzes eingestellt werden. Möglich wäre auch, diese Schwelle im Endprodukt über ein "Drehrädchen" von fahrer oder einer anderen Person einstellbar zu machen.

Im bevorzugten Ausführungsbeispiel ist das neuronale Netz ein mehrlagiges Perzeptron, dessen Struktur in Figur 3 angedeutet ist. Die Gewichte (Schwellenwerte für die Bewertung der Eingangsgrößen) der einzelnen Neuronen werden dabei im Rahmen eines Trainings bestimmt. Dieses Training basiert auf Ergebnissen von Versuchsreihen, in denen das jeweilige Verhalten der ausgewerteten Betriebsgrößen mit dem tatsächlichen Fahrerverhalten (beabsichtigter Spurwechsel / unbeabsichtigter Spurwechsel) aufgezeichnet wird. Durch einen Lernalghoritmus (backpropagation für musterweises MLP-Training) werden die Gewichte der Neuronen derart optimiert, dass sich ein möglichst großer Klassifizierungserfolg der Versuchsdaten ergibt.

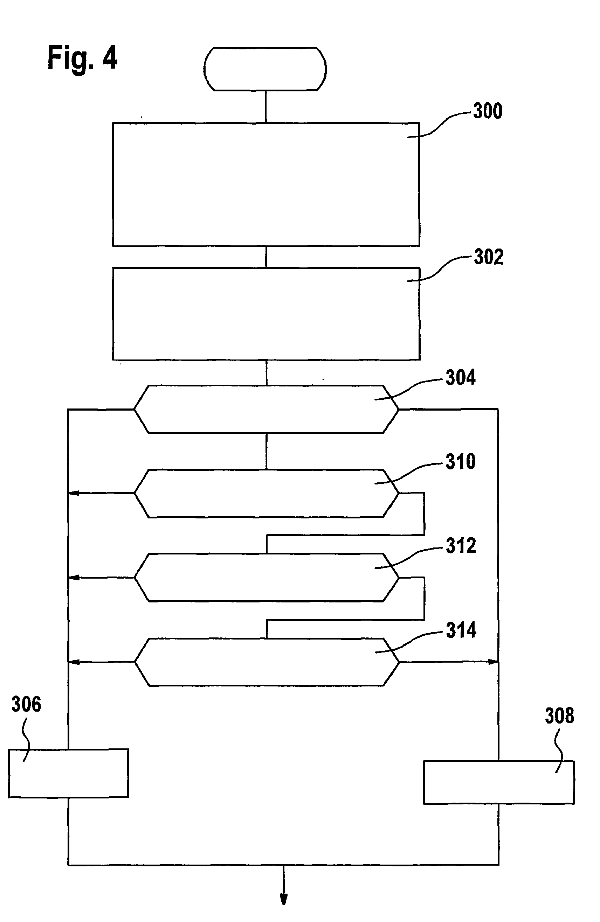

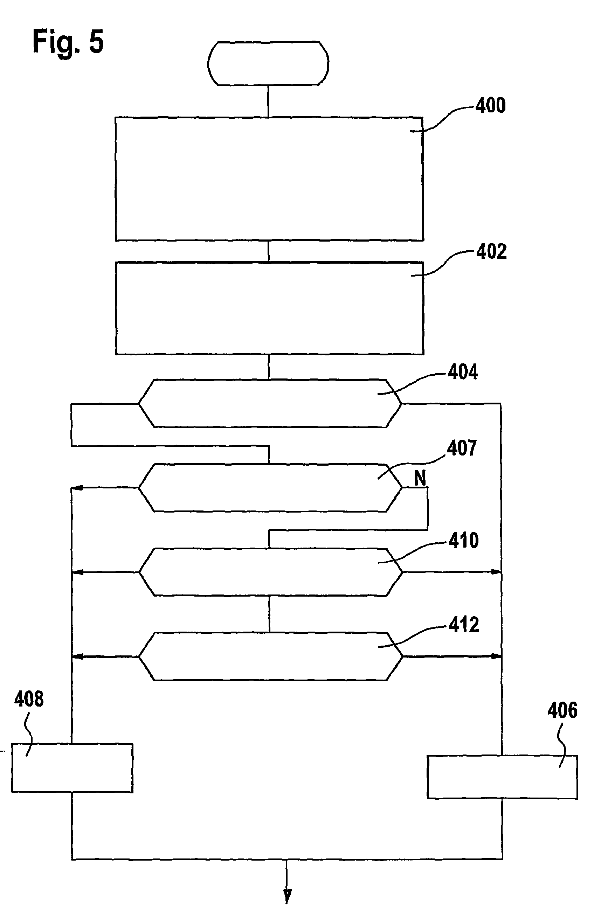

In einem anderen Ausführungsbeispiel wird zur Klassifizierung kein neuronales Netz eingesetzt, sondern starre Kriterien für die jeweiligen ausgewerteten Betriebsgrößen vorgegeben. Diese Kriterien, vorzugsweise lineare Trenngeraden, werden ebenfalls auf der Basis der oben erwähnten Versuchsergebnisse festgelegt. Die Flussdiagramme der Figuren 4 und 5 zeigen ein Programm, mit dessen Hilfe die Klassifizierung auf der Basis derartiger Kriterien für die linke (Figur 4) und für die rechte Fahrzeugseite (Figur 5) durchgeführt wird. Die konkreten Kriterien können dabei umfangreiche Funktionen darstellen, sind empirisch festgelegt und für die linke und rechte Seite für ein oder mehrere Kriterien unterschiedlich.

In Figur 4 ist als Flussdiagramm ein Programm skizziert, welches auf der linken Seite des Fahrzeugs eine Unterscheidung zwischen beabsichtigtem Spurwechsel und unbeabsichtigtem Spurwechsel erlaubt. Im ersten Schritt 300 werden die bereits oben erwähnten Betriebsgrößen Randverlauf auf der linken Seite, Fahrspurverlauf auf der linken Seite, Geschwindigkeit des Fahrzeugs, Lenkwinkel des Fahrzeugs sowie Beschleunigungswunsch des Fahrers eingelesen. Im darauffolgenden Schritt 302 werden der Winkel zwischen Fahrspur und Randmarkierung, der laterale Abstand zur Randmarkierung sowie die Änderung des Lenkwinkels bestimmt. Darüber hinaus werden in diesem Schritt aus dem Speicher frühere Werte dieser Größen ausgelesen, beispielsweise Werte die 10 Zeiteinheiten und/oder 30 Zeiteinheiten vorher berechnet wurden. Im darauffolgenden Schritt 304 wird zunächst ein Kriterium für den Abstand zur Randmarkierung überprüft. Dabei wird die Änderung dieses Abstandes zwischen dem jetzigen Zeitpunkt und einem vorhergehenden sowie zwischen dem jetzigen Zeitpunkt und einem noch früheren Wert überprüft. Nimmt die Änderung des Abstandes zu dem vorangegangenen Wert gegenüber der Änderung des Abstandes zudem noch früheren Wert zu, so wird davon ausgegangen, dass ein beabsichtigter Spurwechsel vorliegt. Ein entsprechendes Signal wird in Schritt 306 weitergegeben. Auf der anderen Seite ergibt sich gemäß Schritt 308 ein Signal für einen unbeabsichtigten Spurwechsel, wenn die Änderung des Abstandes zudem vorangegangenen Wert gegenüber der Änderung des Abstandes zudem noch früheren Wert abnimmt. Das Kritierium ist derart festgelegt, dass ein Wertebereich für die Abständänderungen entsteht, in dem keine Entscheidung getroffen werden kann. In diesem Fall wird in Schritt 310 der Beschleunigungswunsch des Fahrers herangezogen. Überschreitet dieser einen vorgegebenen Wert, so wird gemäß Schritt 306 von einem beabsichtigten Spurwechsel ausgegangen. Im gegenteiligen Fall wird in Schritt 312 das Kriterium für den Lenkwinkel abgeprüft. Dieses besteht darin, dass bei einer starken Lenkwinkeländerung von einem beabsichtigten Spurwechsel ausgegangen werden kann. Ist die Änderung des Lenkwinkels also größer als ein Schwellenwert, wird Schritt 306 (Anzeige beabsichtigter Spurwechsel) eingeleitet. Ist das Lenkwinkelkriterium in Schritt 312 nicht erfüllt, so wird in Schritt 314 ein Winkel-/Geschwindigkeitskriterium herangezogen. Dabei wird die Geschwindigkeitsänderung des Fahrzeugs mit dem Winkel zum Fahrspurrand bewertet. Ist die Geschwindigkeitsänderung größer als ein von diesem Winkel abhängige Größe, wird ein beabsichtigter Spurwechsel angenommen, ist die Geschwindigkeitsänderung kleiner als dieser Wert, so wird von einem unbeabsichtigten Spurwechsel ausgegangen (Schritt 308). Auf diese Weise wird eine Klassifizierung des Spurwechselvorgangs vorgenommen.

Wesentlich ist, dass nur sichere Fallunterscheidungen zur Anzeige des entsprechenden Ergebnisses führen, somit zunächst auch keine Entscheidung akzeptiert wird und erst das letzte Kritierium führt in allen verbleibenden Fällen zur definitiven Entscheidung.

Für die rechte Seite hat es sich gezeigt, dass das Fahrerverhalten sich gegenüber der linken unterscheidet, so dass die Kriterien angepasst und auch die Reihenfolge der Abprüfung der Kriterien verändert werden muss. Figur 5 skizziert ein Flussdiagramm zur Klassifikation der Spurwechselvorgänge auf der rechten Seite. In den Schritten 400 und 402 werden die oben erwähnten Größen für die rechte Fahrzeugseite eingelesen bzw. berechnet. In Schritt 404 wird zunächst das Lenkwinkelkriterium überprüft. Liegt nur eine kleine Lenkwinkeländerung vor, so wird gemäß Schritt 406 von einer Unaufmerksamkeit ausgegangen. Ist dieses Kriterium nicht erfüllt, wird in Schritt 407 das Beschleunigungswunschkriterium abgeprüft. Überschreitet diese Größe einen bestimmten Schwellenwert, der vor einen großen Beschleunigungswunsch des Fahrers spricht, wird in Schritt 408 von einem beabsichtigten Spurwechsel ausgegangen Ist auch dieses Kriterium nicht erfüllt, so wird in Schritt 410 das Winkel-/Geschwindigkeitskriterium abgeprüft. Hier wird von einem beabsichtigten Spurwechsel (Schritt 408) ausgegangen, wenn die Geschwindigkeitsänderung größer als ein vom Winkel zum Fahrspurrand abhängiger Grenzwert ist, während von einem unbeabsichtigten Spurwechsel (Schritt 406) ausgegangen wird, wenn die Geschwindigkeitsänderung kleiner als ein vom Winkel abhängiger Grenzwert ist. Die Grenzwerte sind dabei derart festgelegt, dass auch hier eine Wertezone entsteht, in der keine Entscheidung getroffen werden kann. Liegt der Wert in diesem Bereich, so wird in Schritt 412 der Abstand zur Grenzlinie bewertet Ist die Änderung dieses Abstandes größer als ein bestimmter Wert, so wird von einem beabsichtigten Spurwechsel (408) ausgegangen, ist er kleiner als dieser Wert, so wird von einem unbeabsichtigten ausgegangen (406).

Wie oben dargestellt wird die geschilderte Vorgehensweise zur Spurwechselklassifizierung nicht nur in Verbindung mit dem eingangs erwähnten Spurverlassenswarner sondern auch mit anderen Fahrerassistenzsystemen wie beispielsweise einem adaptiven Fahrgeschwindigkeitsregler, einem Toten-Winkel-Erkennungssystem oder einem Spurwechselunterstützungssystem eingesetzt.

Darüber hinaus wird je nach Ausführungsbeispiel auf eine oder die andere der dargestellten Betriebsgrößen zur Klassifizierung verzichtet. Ferner werden in einem anderen Ausführungsbeispiel nicht nur zwei zurückliegende Größen sondern mehrere zurückliegende Größen zur Kriterienbildung herangezogen.

Alternativen zur Verwendung einer Lenkwinkelgröße ist die Verwendung einer Gierrate, zum lateralen Abstand zur Fahrspurmarkierung die laterale Beschleunigung des Fahrzeugs, die beide durch entsprechende Messeinrichtungen erfasst werden können.

## Patentansprüche

1. Verfahren zur Fahrerunterstützung, wobei ein Ausgangssignal erzeugt wird, wenn ein Spurwechselvorgang des Fahrzeugs erkannt wird, wobei der erkannte Spurwechsel anhand von Betriebsgrößen des Fahrzeugs selbst, anhand derer auf das Verhalten des Fahrers geschlossen werden kann, klassifiziert wird, ob der Spurwechsel beabsichtigt oder unbeabsichtigt ist, und das Ausgangssignal abhängig von diesem Ergebnis erzeugt wird, **dadurch gekennzeichnet, dass** ein Spurverlassenswarner eine Warnung bzw. eine Spurhaltereaktion ausführt, wenn der Spurwechsel unbeabsichtigt ist, während die Warnung bzw. die Spurhaltereaktion unterbleibt, wenn der Spurwechsel beabsichtigt ist.

2. Verfahren nach Anspruch 1, **dadurch gekennzeichnet, dass** eine der Betriebsgrößen der Lenkwinkel oder die Gierrate des Fahrzeugs ist.

3. Verfahren nach einem der vorhergehenden Ansprüche, **dadurch gekennzeichnet, dass** eine der Betriebsgrößen der Beschleunigungswunsch des Fahrers, insbesondere eine aus der Auslenkung des Fahrpedals abgeleitete Größe ist.

4. Verfahren nach einem der vorhergehenden Ansprüche, **dadurch gekennzeichnet, dass** eine der Betriebsgrößen die Geschwindigkeit des Fahrzeugs ist.

5. Verfahren nach einem der vorhergehenden Ansprüche, **dadurch gekennzeichnet, dass** eine der Betriebsgrößen der Winkel zwischen der Fahrspur des Fahrzeugs und der Grenze der Fahrspur ist.

6. Verfahren nach einem der vorhergehenden Ansprüche, **dadurch gekennzeichnet, dass** eine der Betriebsgrößen der Abstand des Fahrzeugs zur Randmarkierung der Fahrspur oder die laterale Beschleunigung des Fahrzeugs ist.

7. Verfahren nach einem der vorhergehenden Ansprüche, **dadurch gekennzeichnet, dass** zur Unterscheidung, ob ein beabsichtigter oder ein unbeabsichtigter Spurwechsel vorliegt, die Betriebsgrößen als neuronales Netz ausgebildeten Klassifikator zugeführt werden, welcher anhand der Betriebsgrößen klassifiziert, ob der Spurwechsel beabsichtigt oder unbeabsichtigt ist.

8. Verfahren nach einem der vorhergehenden Ansprüche, **dadurch gekennzeichnet, dass** als Ausgangsgröße des Klassifikators eine Größe erzeugt wird, die Werte zwischen den Werten für einen sicher erkannten beabsichtigten Spurwechsel und für einen sicher erkannten unbeabsichtigten Spurwechsel annimmt.

9. Verfahren nach Anspruch 8, **dadurch gekennzeichnet, dass** die Ausgangsgröße des Klassifikators mit einem vorzugsweise einstellbaren Schwellenwert verglichen wird, in dessen Abhängigkeit festgestellt wird, ob ein beabsichtigter oder ein unbeabsichtigter Spurwechsel vorliegt.

10. Verfahren nach einem der vorhergehenden Ansprüche, **dadurch gekennzeichnet, dass** die Unterscheidung, ob ein beabsichtigter oder ein unbeabsichtigter Spurwechsel vorliegt, anhand eines Klassifikators vorgenommen wird, bei welchem die Betriebsgrößen Kriterien unterworfen werden, anhand derer die Unterscheidung vorgenommen wird.

11. Verfahren nach einem der vorhergehenden Ansprüche, **dadurch gekennzeichnet, dass** bei der Bestimmung; ob ein beabsichtigter oder ein unbeabsichtigter Spurwechsel vorliegt auch zurückliegende Werte und/oder die zeitliche Änderung wenigstens einer der Betriebsgrößen berücksichtigt wird.

12. Verfahren nach einem der vorhergehenden Ansprüche, **dadurch gekennzeichnet, dass** die Betriebsgrößen zur Klassifizierung des Spurwechselvorgangs mit vorgegebenen Kriterien bewertet werden, wobei die Kriterien unterschiedlich sind, je nachdem ob der Spurwechsel nach links oder nach rechts erfolgt.

13. Vorrichtung zur Fahrerunterstützung, mit einer Auswerteeinheit (10) zur Erzeugung eines Ausgangssignals, wenn ein Spurwechselvorgang des Fahrzeugs erkannt wird, die Auswerteeinheit (10) ein Klassifikator (218) umfasst, der derart ausgebildet ist, der derart ausgebildet ist, dass er anhand von Betriebsgrößen des Fahrzeugs selbst, anhand denen auf das Verhalten des Fahrers geschlossen werden kann, zwischen einem beabsichtigten und einem unbeabsichtigten Spurwechsel unterscheidet und die Auswerteeinheit (10) derart ausgebildet ist, dass sie das Ausgangssignal abhängig vom Ergebnis der Klassifikation erzeugt, **dadurch gekennzeichnet, dass** die Auswerteeinheit (10) einen Spurverlassenswarner umfasst, der derart ausgebildet ist, dass bei einem beabsichtigten Spurwechsel die Warnung bzw. die Spurhaltereaktion unterbleibt, während bei unbeabsichtigtem Spurwechsel eine Warnung bzw. eine Spurhaltereaktion ausgeführt wird.

## Claims

1. Method for assisting a driver, wherein an output signal is generated if a lane change process of the vehicle is detected, wherein, on the basis of operational variables of the vehicle itself which can be used to infer the behaviour of the driver, the detected lane change is classified with respect to whether the lane change is intentional or unintentional, and the output signal is generated as a function of this result, **characterized in that** a lane exit alarm issues a warning or carries out a lane keeping reaction if the lane change is unintentional, while the warning or the lane keeping reaction does not occur if the lane change is intended.

2. Method according to Claim 1, **characterized in that** one of the operational variables is the steering angle or the yaw rate of the vehicle.

3. Method according to one of the preceding claims, **characterized in that** one of the operational variables is the acceleration request by the driver, in particular a variable which is derived from the deflection of the accelerator pedal.

4. Method according to one of the preceding claims, **characterized in that** one of the operational variables is the speed of the vehicle.

5. Method according to one of the preceding claims, **characterized in that** one of the operational variables is the angle between the vehicle's lane and the boundary of the lane.

6. Method according to one of the preceding claims, **characterized in that** one of the operational variables is the distance between the vehicle and the edge marking of the lane or the lateral acceleration of the vehicle.

7. Method according to one of the preceding claims, **characterized in that**, in order to differentiate whether an intentional or an unintentional lane change is occurring, the operational variables are fed to a classifier which is embodied as a neural network and which uses the operational variables to classify whether the lane change is intentional or unintentional.

8. Method according to one of the preceding claims, **characterized in that** a variable which assumes values between the values for a reliably detected intentional lane change and a reliably detected unintentional lane change is generated as an output variable of the classifier.

9. Method according to Claim 8, **characterized in that** the output variable of the classifier is compared with a preferably adjustable threshold value as a function of which it is determined whether an intentional or an unintentional lane change is occurring.

10. Method according to one of the preceding claims, **characterized in that** the differentiation as to whether an intentional or an unintentional lane change is occurring is performed on the basis of a classifier in which the operational variables are subjected to criteria on the basis of which the differentiation is performed.

11. Method according to one of the preceding claims, **characterized in that** values from the past and/or the change in at least one of the operational variables over time are taken into account in the determination of whether an intentional or an unintentional lane change is occurring.

12. Method according to one of the preceding claims, **characterized in that** the operational variables for classifying the lane change process are evaluated with predefined criteria, wherein the criteria are different depending on whether the lane change is to the left or to the right.

13. Device for assisting a driver having an evaluation unit (10) for generating an output signal if a lane change process of the vehicle is detected, the evaluation unit (10) comprises a classifier (218) which is embodied in such a way that it differentiates between an intentional and an unintentional lane change on the basis of operational variables of the vehicle itself on the basis of which the behaviour of the driver can be inferred, and the evaluation unit (10) is embodied in such a way that it generates the output signal as a function of the result of the classification, **characterized in that** the evaluation unit (10) comprises a lane exiting alarm which is embodied in such a way that, in the event of an intentional lane change, the warning or the lane keeping reaction does not occur, while, in the case of an unintentional lane change, a warning is issued or a lane keeping reaction is carried out.

## Revendications

1. Procédé d'assistance au conducteur, dans lequel un signal de sortie est formé lorsqu'une opération de changement de bande de circulation du véhicule est détectée, le changement de bande de circulation détecté étant classé à l'aide de grandeurs de fonctionnement propres au véhicule qui permettent de tirer des conclusions sur le comportement du conducteur pour vérifier si le changement de bande de circulation est volontaire ou involontaire, le signal de sortie est formé en fonction de ce résultat,
**caractérisé en ce que**
un avertisseur de sortie de bande de circulation émet un avertissement ou exécute une réaction de retour sur la bande de circulation si le changement de bande de circulation est involontaire, tandis que l'avertissement ou la réaction de retour sur la bande de circulation n'est pas exécuté(e) si le changement de bande de circulation est volontaire.

2. Procédé selon la revendication 1, **caractérisé en ce que** l'une des grandeurs de fonctionnement est l'angle de volant ou le taux de lacet du véhicule.

3. Procédé selon l'une des revendications précédentes, **caractérisé en ce que** l'une des grandeurs est l'intention du conducteur d'accélérer, et en particulier une grandeur dérivée de l'inclinaison de la pédale d'accélération.

4. Procédé selon l'une des revendications précédentes, **caractérisé en ce que** l'une des grandeurs de fonctionnement est la vitesse du véhicule.

5. Procédé selon l'une des revendications précédentes, **caractérisé en ce que** l'une des grandeurs de fonctionnement est l'angle entre la trajectoire du véhicule et la limite de la bande de circulation.

6. Procédé selon l'une des revendications précédentes, **caractérisé en ce que** l'une des grandeurs de fonctionnement est la distance entre le véhicule et le marquage du bord de la bande de circulation ou l'accélération latérale du véhicule.

7. Procédé selon l'une des revendications précédentes, **caractérisé en ce que** pour distinguer si le changement de bande de circulation est volontaire ou involontaire, les grandeurs de fonctionnement sont amenées à un classificateur configuré comme réseau neuronal qui décide à l'aide des grandeurs de fonctionnement si le changement de bande de circulation est volontaire ou involontaire.

8. Procédé selon l'une des revendications précédentes, **caractérisé en ce que** comme grandeur de sortie du classificateur, on forme une grandeur qui augmente entre les grandeurs qui correspondent à un changement de bande de circulation reconnu comme certainement volontaire et celles qui correspondent à un changement de bande de circulation reconnu comme certainement involontaire.

9. Procédé selon la revendication 8, **caractérisé en ce que** les grandeurs de sortie du classificateur sont comparées à une valeur de seuil, par exemple ajustable et en fonction de laquelle on vérifie si le changement de bande de circulation est volontaire ou involontaire.

10. Procédé selon l'une des revendications précédentes, **caractérisé en ce que** pour distinguer si le changement de bande de circulation est volontaire ou involontaire, on utilise un classificateur dans lequel les grandeurs de fonctionnement sont soumises à des critères à l'aide desquels la distinction est réalisée.

11. Procédé selon l'une des revendications précédentes, **caractérisé en ce que** lorsque l'on détermine si le changement de bande de circulation est volontaire ou involontaire, on tient également compte de valeurs antérieures et/ou de la variation dans le temps d'au moins l'une des grandeurs de fonctionnement.

12. Procédé selon l'une des revendications précédentes, **caractérisé en ce que** pour classer l'opération de changement de bande de circulation, les grandeurs de fonctionnement sont évaluées à l'aide de critères prédéterminés, les critères étant différents selon que le changement de bande de circulation s'effectue vers la gauche ou vers la droite.

13. Dispositif d'assistance au conducteur, doté d'une unité d'évaluation (10) qui forme un signal de sortie lorsqu'une opération de changement de bande de circulation du véhicule est détectée, l'unité d'évaluation (10) comprenant un classificateur (218) configuré de telle sorte qu'à l'aide de grandeurs de fonctionnement propres au véhicule qui permettent de tirer des conclusions sur le comportement du conducteur, il fait une distinction entre un changement de bande de circulation volontaire et un changement de bande de circulation involontaire, l'unité d'évaluation (10) étant configurée de telle sorte qu'elle forme le signal de sortie en fonction du résultat de la classification,
**caractérisé en ce que**
l'unité d'évaluation (10) comprend un avertisseur de sortie de bande de circulation configuré de telle sorte que lorsque le changement de bande de circulation est volontaire, il n'émet pas d'avertissement ni ne réagit pour revenir dans la bande de circulation, tandis que lorsque le changement de bande de circulation est involontaire, il émet un avertissement ou exécute une réaction de retour sur la bande de circulation.
